# EUROPÄISCHE PATENTSCHRIFT

(11) **EP 3 867 199 B1**
(45) Veröffentlichungstag und Bekanntmachung des Hinweises auf die Patenterteilung: **18.01.2023**
(21) Anmeldenummer: 19765986.5
(22) Anmeldetag: 05.09.2019
(51) Int. Cl.: C02F 1/52, C02F 1/66, C02F 101/10, C02F 101/20, C02F 103/34

(54) **VERFAHREN ZUR FÄLLUNG VON ARSEN UND SCHWERMETALL AUS SAUREM PROZESSWASSER**
METHOD FOR THE PRECIPITATION OF ARSENIC AND HEAVY METALS FROM ACIDIC PROCESS WATER
PROCÉDÉ DE PRÉCIPITATION D'ARSENIC ET DE MÉTAUX LOURDS D'UNE EAU DE TRAITEMENT ACIDE

(30) Priorität: 16.10.2018 DE 102018125677
(43) Veröffentlichungstag der Anmeldung: 25.08.2021
(73) Patentinhaber: Eisenmann Environmental Technology GmbH, 71032 Böblingen (DE)
(72) Erfinder: SCHUMACHER, Jochen, 72072 Tübingen (DE); STEIN, Uwe, 71088 Holzgerlingen (DE); MEISENZAHL, Bodo, 72127 Kusterdingen (DE)
(74) Vertreter: Ostertag & Partner Patentanwälte mbB
(86) Internationale Anmeldenummer: PCT/EP2019/073762
(87) Internationale Veröffentlichungsnummer: WO 2020/078618

(56) Entgegenhaltungen:
- WO-A1-81/02569
- WO-A1-2013/091749
- WO-A1-2014/061038

## Beschreibung

Die Erfindung betrifft ein Verfahren zur Fällung von Arsen und Schwermetall aus saurem, insbesondere schwefelsaurem, Prozesswasser, das sowohl arsen- als auch schwermetallhaltig ist, wobei das Verfahren einen Fällungs-Verfahrensabschnitt mit einer Sulfid-Fällungsstufe umfasst, in welcher Arsen und wenigstens ein Primär-Schwermetall gemeinsam ausgefällt werden, indem dem Prozesswasser ein Sulfid-Fällungsreagenz zugegeben wird, so dass Arsen als Arsensulfid und das wenigstens eine Primär-Schwermetall als Metallsulfid ausfallen.

Saure Prozesswässer, die sowohl arsen- als auch schwermetallhaltig sind, fallen als schwefelsaure Abwässer beispielsweise bei der Kupferverhüttung oder bei der Herstellung von Halbleiterbauelementen an. Aber auch bei vielen anderen industriellen Prozessen können schwefelsaure Prozesswässer entstehen, die mit Arsen und Schwermetallen belastet sind. Solche Prozesswässer werden auch als schwefelsaures Waschwasser bezeichnet.

Mit Primär-Schwermetall soll vorliegend lediglich dasjenige Schwermetall benannt sein, dessen gemeinsame Fällung mit Arsen betrachtet wird. Das Prozesswasser kann noch weitere, von dem Primär-Schwermetall verschiedene Schwermetalle enthalten, wobei das Primär-Schwermetall häufig im Vergleich zu den weiteren Schwermetallen in der höchsten Konzentration im Prozesswasser vorliegt. Nachfolgend wird die Erfindung am oben genannten Beispiel von Prozesswässern erläutert, wie sie bei der Verhüttung von Kupfer in Folgeprozessen entstehen.

Bei der Verhüttung von Kupfer fallen schwefelhaltige Rauchgase an. Diese werden einer an und für sich bekannten Rauchgasbehandlung unterzogen, bei welcher der vorhandene Schwefel zu Schwefelsäure umgewandelt wird. Die enthaltenen Verunreinigungen sind schließlich in einem sauren Prozesswasser gesammelt, welches bei der Verhüttung von Kupfer als Waschlösung bzw. als Waschsäure bezeichnet wird. Ein derartiges Prozesswasser bzw. eine solche Waschsäure kann Säure in Konzentrationen zwischen 5% und 35% enthalten. Entsprechend hat das Prozesswasser einen niedrigen und gegebenenfalls auch negativen pH-Wert. Neben Kupfer enthält derartiges Prozesswasser weitere (Schwer-)metalle, wie Zink, Cadmium, Molybdän, Blei, Selen und Quecksilber, sowie andere Verunreinigungen, darunter vor allem Arsen.

Arsen ist ein Umweltgift und es ist daher stets das Ziel, anfallende Rest- oder Abfallstoffe wie derartige Prozesswässer aufzubereiten und dabei so weit wie möglich von Arsen und dessen Verbindungen zu befreien. Es ist hierzu z.B. bekannt, Arsen als Sulfid aus Waschsäuren auszufällen.

Aus der DE 34 18 241 A1 ist beispielsweise ein Verfahren zur Entfernung von Arsen aus Abfallschwefelsäuren bekannt, bei dem in einer Schwefelwasserstoffatmosphäre als Sulfidierungsmittel eine wässrige Lösung aus Natriumsulfid NaS₂ und Natriumhydrogensulfid NaHS verwendet wird, deren Natriumsulfidmenge überstöchiometrisch zum Arsengehalt der Abfallsäure eingestellt wird. Bei derartigen Fällungsreaktionen werden auch in dem Prozesswasser vorhandenes Kupfer und andere vorhandene Schwermetalle als Sulfid ausgefällt. Die ausgefällten Sulfide, d.h. Arsensulfid und Kupfersulfid sowie die Sulfide anderer vorhandener Schwermetalle werden nach der Fällungsreaktion aus dem erhaltenen Filtergemisch herausgefiltert und der Filterkuchen anschließend entsorgt. Weitere relevante Dokumente sind WO 2014/061038 A1, WO 2013/091749 A1 und WO 81/02569 A1.

Bei einer derartigen Entfernung von Arsen soll bei dem abschließend erhaltenen Filtrat die Restkonzentration von Arsen so gering wie möglich und im optimalen Fall unter 1 mg/L liegen. Bei den bekannten Verfahren wird dies durch eine hohe Dosierung von Sulfid-Fällungsreagenz erreicht.

Hierdurch kommt es zu einer beträchtlichen Konzentration von Schwefelwasserstoff in der Abluft, die bis zu 2 Vol.% betragen können.

Darüber hinaus fällt bei bekannten Fällungsverfahren Arsensulfid in Form von einer Art Flocken aus, welche sich durch eine geringe Dichte, kleine Flockengröße, aber insgesamt ein verhältnismäßig großes Volumen auszeichnen Diese Flocken zeigen eine sehr geringe Tendenz zur Sedimentation und sind darüber hinaus mechanisch instabil. Bei dem Filtervorgang werden die Arsensulfid-Flocken daher zusätzlich leicht zerrieben und es entsteht eine Art Schmierfilm oder Schlamm, durch den ein Filter, welcher beispielsweise als Filtertuch ausgebildet ist, bereits nach kurzer Zeit verstopft, weshalb dann ein weiterer bzw. effektiver Filtervorgang nicht mehr möglich ist. Der Filter muss folglich bereits nach geringen Mengen an aufgenommenen Sulfiden und entsprechend kurzer Standzeit gewechselt werden, was den Filtervorgang arbeits- und zeitaufwendig sowie kostenintensiv macht.

Es ist Aufgabe der Erfindung, ein Verfahren der eingangs genannten Art bereitzustellen, welches demgegenüber eine effektivere Abtrennung von Arsen und wenigstens einem Schwermetall aus saurem Prozesswasser ermöglicht.

Diese Aufgabe wird bei einem Verfahren der eingangs genannten Art durch die Merkmale des Anspruchs 1 gelöst. Der unabhängiger Verfahrensanspruch 1 befasst die wesentlichen Merkmale der Erfindung. Weitere, bevorzugte Ausführungsformen werden in den abhängigen Ansprüchen 2-8 beschrieben. Die Aufgabe wird zumindest dadurch gelöst, dass:
a) die Sulfid-Fällungsstufe einen ersten Sulfid-Fällungsschritt umfasst, bei welchem dem Prozesswasser in einem ersten Sulfid-Fällungsreaktor Sulfid-Fällungsreagenz zugegeben wird, wodurch eine Intermediatflüssigkeit erzeugt wird, welche noch Arsen oder noch Arsen und Primär-Schwermetall enthält;
b) die Intermediatflüssigkeit nach dem ersten Sulfid-Fällungsschritt in einen zweiten Sulfid-Fällungsreaktor überführt wird;
c) die Sulfid-Fällungsstufe einen zweiten Sulfid-Fällungsschritt umfasst, bei welchem der Intermediatflüssigkeit in dem zweiten Fällungsreaktor Sulfid-Fällungsreagenz zugegeben wird, wodurch eine Restflüssigkeit erzeugt wird, welche weitgehend von Arsen befreit ist.

Erfindungsgemäß wurde erkannt, dass es durch eine Sulfid-Fällungsstufe mit zwei Schritten möglich ist, effizient und ressourcensparend auf besonders niedrige Arsenkonzentrationen zu kommen.

Um die Dosierung von Sulfid-Fällungsreagenz im ersten Sulfid-Fällungsschritt zielgerichtet vornehmen zu können, ist es günstig, wenn vor dem ersten Sulfid-Fällungsschritt in einer Analysestufe eine Analyse des Prozesswassers zumindest im Hinblick auf den Arsengehalt durchgeführt wird.

Indem im ersten Sulfid-Fällungsschritt Sulfid-Fällungsreagenz zumindest bezogen auf den Arsengehalt des Prozesswassers unterstöchiometrisch zugegeben wird, kann zunächst eine Vor- oder Grobfällung von Arsen und vorhandenem Primär-Schwermetall und gegebenenfalls weiteren Schwermetallen erfolgen.

Dabei ist es vorteilhaft, wenn Sulfid-Fällungsreagenz unterstöchiometrisch im Verhältnis von 1:1,2 bis 1:1,01, vorzugsweise im Verhältnis 1:1,15 bis 1:1,01, bevorzugt im Verhältnis 1:1,1 bis 1:1,01 und besonders bevorzugt im Verhältnis 1:1,05 bezogen auf den Arsengehalt des Prozesswassers zugegeben wird.

Um auch die Dosierung von Sulfid-Fällungsreagenz im zweiten Sulfid-Fällungsschritt zielgerichtet vornehmen zu können, ist es günstig, dass vor dem zweiten Sulfid-Fällungsschritt in einer Analysestufe eine Analyse der Intermediatflüssigkeit zumindest im Hinblick auf den Arsengehalt durchgeführt wird.

Um auf besonders niedrige Arsenkonzentrationen in der verbleibenden Restflüssigkeit zu kommen, ist es günstig, wenn beim zweiten Sulfid-Fällungsschritt Sulfid-Fällungsreagenz zumindest bezogen auf den Arsengehalt der Intermediatflüssigkeit überstöchiometrisch zugegeben wird.

Dabei wird vorteilhaft Sulfid-Fällungsreagenz überstöchiometrisch im Verhältnis 1,5:1, im Verhältnis 2:1, im Verhältnis 3:1 oder im Verhältnis von mindestens 4:1 oder im Verhältnis 20:1 bezogen auf den Arsengehalt der Intermediatflüssigkeit zugegeben.

Erfindungsgemäß wird
a) nach dem ersten Sulfid-Fällungsschritt wenigstens eine Trennstufe durchgeführt, in welcher ausgefallene Sulfide von der Intermediatflüssigkeit getrennt werden; und/oder
b) nach dem zweiten Sulfid-Fällungsschritt wenigstens eine Trennstufe durchgeführt, in welcher ausgefallene Sulfide von der Restflüssigkeit getrennt werden.

Durch die zunächst unterstöchiometrische Ausfällung im ersten Sulfid-Fällungsschritt hat der entstehende Fällungsschlamm bessere Filtrationseigenschaften als es bei einer direkten überstöchiometrischen Ausfällung gegeben ist. Die ausgefallenen Sulfide können daher effektiv mit einer Filtereinheit, die insbesondere ein Filtertuch umfasst, von der Intermediatflüssigkeit getrennt werden.

Es ist wesentlich, wenn dem ersten Sulfid-Fällungsreaktor und/oder dem zweiten Fällungsreaktor und/oder einer oder mehreren Trennstufen Luft, insbesondere konditionierte Luft, zugeführt wird. Diese Luft kann Schwefelwasserstoff aus dem Gasraum der Reaktoren oder der Trennstufen verdrängen, so dass vorhandener Schwefelwasserstoff effektiv abgeführt werden kann.

Es ist besonders wirkungsvoll, wenn Schwefelwasserstoff von wenigstens einer der Verfahrensstufen und Verfahrensschritte, in denen Schwefelwasserstoff freigesetzt wird, als Sulfid-Fällungsreagenz oder zur Erzeugung von Sulfid-Fällungsreagenz für den ersten Sulfid-Fällungsschritt verwendet wird. Auf diese Weise kann im Vergleich zu bekannten Verfahren in hohem Maße Sulfid-Fällungsreagenz eingespart werden, wodurch die Entfernung von Arsen ressourcenschonend und kostenreduziert durchgeführt werden kann.

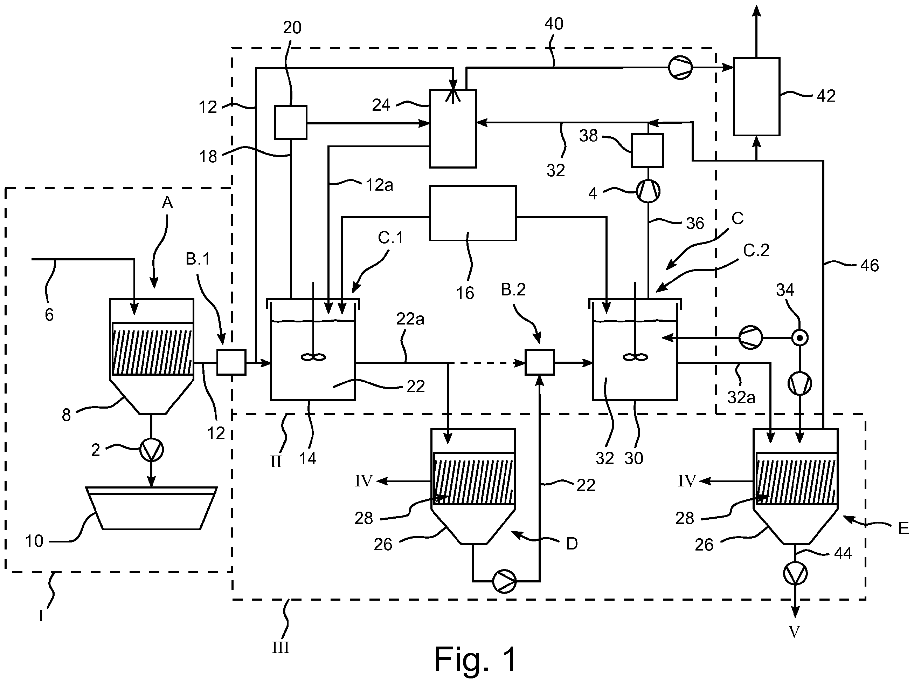

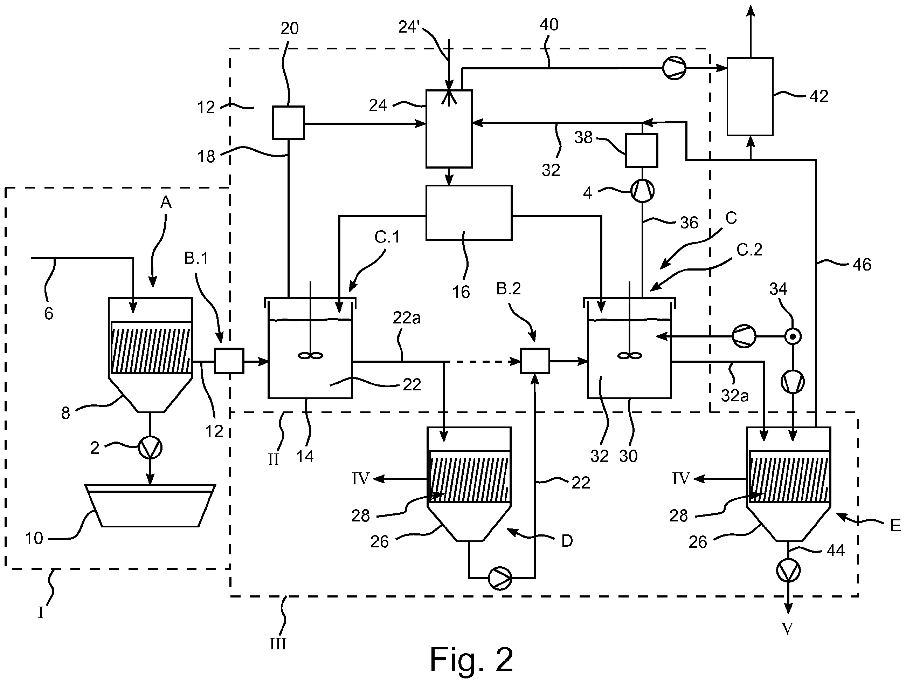

Nachfolgend wird ein Ausführungsbeispiel des erfindungsgemäßen Verfahrens anhand der Figuren 1 und 2 näher erläutert, welche zwei Varianten des Verfahrens schematisch veranschaulichen.

Dort sind mehrere Pumpen und Gebläse gezeigt, von denen der Übersichtlichkeit halber lediglich eine Pumpe mit 2 und lediglich ein Gebläse mit 4 bezeichnet ist. Es sind nicht in allen Leitungen erforderliche Pumpen oder Gebläse dargestellt. Förderleitungen sind in dem Verfahrensschema durch Pfeile veranschaulicht, deren Pfeilrichtung die jeweilige Förderrichtung anzeigt. Auf eine jeweilige Kennzeichnung der Förderleitungen wurde verzichtet. Die Pumpen und Gebläse steuern den jeweiligen Volumenstrom der jeweils geförderten Fluide. Gegebenenfalls sind in den Leitungen auch Ventile vorhanden, welche der Übersichtlichkeit halber nicht eigens gezeigt sind.

In einem mit I bezeichneten Vorbehandlungs-Verfahrensabschnitt erfolgt eine Vorbehandlung, bei der eine bei der eingangs erwähnten Rauchgasbehandlung erhaltene Waschsäure 6 zunächst für die Trennung von Arsen und Kupfer vorbereitet wird. Beispielsweise können insbesondere von der Waschsäure 6 mitgeführte Staubpartikel und ungelöste Arsentrioxid-Partikel unter Verwendung von Fällungshilfsmitteln, wie sie an und für sich bekannt sind, gefällt und abgetrennt werden. Hierzu wird die Waschsäure in einer Abscheide- oder Filterstufe A über eine Zuführleitung zu einer Filtereinheit 8 geführt. Die abgeschiedenen Feststoffe werden in einen Sammelbehälter 10 überführt und von dort einer Entsorgung zugeführt.

Das erhaltene Filtrat bildet nun dasjenige Prozesswasser 12, das von Arsen und Schwermetallen, vornehmlich von Kupfer, befreit werden soll.

Die Zusammensetzung des Prozesswassers 12 wird in einer Analysestufe B.1 zumindest im Hinblick auf den Arsengehalt und beim vorliegenden Ausführungsbeispiel auch auf den Kupfergehalt und/oder die Schwefelsäurekonzentration bestimmt. Üblicherweise haben Prozesswässer bzw. Waschsäuren, wie sie hier betrachtet werden, einen Schwefelsäuregehalt zwischen 1% und 35% und enthalten zwischen 3 g/L und 18 g/L Arsen. Der Kupfergehalt liegt in der Regel bei Größenordnungen zwischen 0,1 g/L und 12 g/l.

Der Verfahrensabschnitt I zur Vorbehandlung kann neben der Filterstufe A noch weitere Behandlungsstufen oder -schritte umfassen, was hier jedoch nicht weiter von Interesse ist.

Kupfer definiert bei dem vorliegenden Ausführungsbeispiel das Primär-Schwermetall. Das von Staub befreite Prozesswasser 12 ist stark sauer und hat einen pH=0. Das Prozesswasser 12 wird nun einem Fällungs-Verfahrensabschnitt II zugeführt, in welchem Arsen und das Primär-Schwermetall, vorliegend somit Kupfer, in einer Sulfid-Fällungsstufe C gemeinsam und gegebenenfalls mit anderen vorhandenen Schwermetallen ausgefällt werden. Die Sulfid-Fällungsstufe C umfasst einen ersten Sulfid-Fällungsschritt C.1 und einen zweiten Sulfid-Fällungsschritt C.2.

In dem ersten Sulfid-Fällungsschritt C.1 wird dem Prozesswasser 12 in einem ersten Sulfid-Fällungsreaktor 14 unter Rühren ein Sulfid-Fällungsreagenz 16 zugegeben. Ein entsprechendes Rührwerk ist in der Figur nur schematisch veranschaulicht und nicht mit einem eigenen Bezugszeichen versehen.

Als Sulfid-Fällungsreagenz 16 dient in der Praxis anorganisches Sulfid, wie beispielsweise Natriumhydrogensulfid NaHS. Aber auch andere Sulfid-Fällungsreagenzien, wie z.B. Dinatriumsulfid, kommen in Betracht. Auch kann Schwefelwasserstoff verwendet werden, der seinerseits auch mittels Schwefelwasserstoff produzierender Bakterien erzeugt werden kann, wie es an und für sich bekannt ist. Das Sulfid-Fällungsreagenz 16 wird dem Prozesswasser 12 bei einer Temperatur von etwa 40°C bis 80°C zugegeben.

Bezogen auf den Arsengehalt des Prozesswassers 12 wird Sulfid-Fällungsreagenz 16 unterstöchiometrisch zugegeben. Dabei wird Sulfid-Fällungsreagenz 16 unterstöchiometrisch im Verhältnis 1:1,2 bis 1:1,01, vorzugsweise im Verhältnis 1:1,15 bis 1:1,01, bevorzugt im Verhältnis 1:1,1 bis 1:1,01 und besonders bevorzugt im Verhältnis 1:1,05 bezogen auf den Arsengehalt des Prozesswassers 12 zugegeben.

Im ersten Sulfid-Fällungsreaktor entstehende Abluft 18 wird mittels einer Messeinrichtung 20, wie sie an und für sich bekannt ist, auf das Vorhandensein von Schwefelwasserstoff überwacht, wobei gegebenenfalls die vorliegende Schwefelwasserstoff-Konzentration erfasst wird. Die Zugabe von Sulfid-Fällungsreagenz 16 zum ersten Sulfid-Fällungsreaktor 14 sollte stets so erfolgen, dass kein Schwefelwasserstoff entsteht. Wenn dennoch Schwefelwasserstoff in der Abluft 18 detektiert wird, wird die Zugabe von Sulfid-Fällungsreagenz 16 entsprechend reduziert. Die Regelung der der zuzugebenden Menge des Sulfid-Fällungsreagenz 16 hängt somit zunächst von den Daten der Analysestufe B.1 und den Daten der Messeinrichtung 20 ab.

Die Abluft 18 wird einer Wascheinrichtung 24, bei der es sich beispielsweise um einen an und für sich bekannten Sprühwäscher handeln kann, dem auch Prozesswasser 12 zugeführt wird. Auf die Wascheinrichtung 24 wird weiter unten nochmals eingegangen.

Alternativ oder ergänzend zu dem Rührwerk kann auch ein Injektorsystem vorgesehen sein, durch welches Prozesswasser 12 und/oder Sulfid-Fällungsreagenz 16 in den ersten Sulfid-Fällungsreaktor 14 eingetragen wird. Beide Alternativen ermöglichen eine energieeffiziente Durchmischung der Komponenten und eine effiziente Fällungsreaktion.

Bei der Fällung von Arsensulfid und Schwermetallsulfid, vornehmlich von Kupfersulfid CuS, im ersten Sulfid-Fällungsreaktor 14 wird eine Intermediatflüssigkeit 22 erzeugt. Bei dieser Fällung handelt es sich um einer Art Vorfällung von Arsensulfid und Schwermetallsulfid bzw. Schwermetallsulfiden. Die nach Zugabe des Sulfid-Fällungsreagenz 16 erzeugte Intermediatflüssigkeit 22 enthält noch immer gelöstes Arsen und Schwermetall oder Schmermetalle, insbesondere Kupfer.

Die Intermediatflüssigkeit 22 wird zusammen mit den ausgefällten Sulfiden als Gemisch 22a einem Abscheideabschnitt III überführt, in dem die ausgefällten Sulfide von der Intermediatflüssigkeit 22 getrennt werden. Hierfür werden eine oder mehrere Trennstufen durchgeführt. In der Figur ist stellvertretend eine Trennstufe D veranschaulicht, in welcher mittels einer Filtereinheit 26 die vorhandenen Fällungsprodukte von der Intermediatflüssigkeit 22 getrennt werden, so dass die Intermediatflüssigkeit 22 als Filtrat verbleibt und sich ein nicht gesondert gekennzeichneter Filterkuchen ausbildet. Beim vorliegenden Ausführungsbeispiel wird das Gemisch für diesen Zweck durch ein Filtertuch 28 geführt.

Der Filterkuchen wird gesammelt und kann im Anschluss in an und für sich bekannter Art und Weise einem Entsorgungsabschnitt IV zugeführt und entsorgt werden.

Die Intermediatflüssigkeit 22 wird nun dem zweiten Sulfid-Fällungsschritt C.2 des Fällungs-Verfahrensabschnitts II zugeführt und hierfür in einen dortigen zweiten Sulfid-Fällungsreaktor 30 überführt.

Bei einer Abwandlung kann das Gemisch 22a aus Intermediatflüssigkeit 22 und den ausgefallenen Sulfiden auch ohne Durchlaufen des Abscheideabschnitts III und somit ohne Trennstufe D unmittelbar vom ersten Sulfid-Fällungsschritt C.1 zum zweiten Sulfid-Fällungsschritt C.2 überführt werden, was durch einen gestrichelten Pfeil veranschaulicht ist. Dabei werden gegebenenfalls die bereits erhaltenen Fällungsprodukte zumindest teilweise mit in den zweiten Sulfid-Fällungsreaktor 30 überführt.

Die Zusammensetzung der Intermediatflüssigkeit 22, die in den zweiten Sulfid-Fällungsreaktor 28 gepumpt wird, wird in einer zweiten Analysestufe B.2 zumindest im Hinblick auf den Arsengehalt und beim vorliegenden Ausführungsbeispiel auch auf den Kupfergehalt und/oder die Schwefelsäurekonzentration bestimmt. Üblicherweise enthält die Intermediatflüssigkeit 22 noch zwischen 10 mg/L und 200 mg/L Arsen. Der Kupfergehalt liegt in der Regel bei Größenordnungen zwischen 1 mg/L bis 10 mg/L. Das Verfahren kann auch zuverlässig durchgeführt werden, wenn auf eine oder beide der Analysestufen B.1 und B.2 verzichtet wird.

Bei dem zweiten Fällungsschritt C.2 wird nun der Intermediatflüssigkeit 22 in dem zweiten Sulfid-Fällungsreaktor 30 unter Rühren Sulfid-Fällungsreagenz 16 zugegeben. Der zweite Sulfid-Fällungsreaktor 30 arbeitet als Reaktor für eine Restausfällung; ein entsprechendes Rührwerk ist in der Figur wieder nur schematisch veranschaulicht und nicht mit einem eigenen Bezugszeichen versehen. Auch bei dem zweiten Sulfid-Fällungsreaktor 30 kann alternativ oder ergänzend zu dem Rührwerk ein Injektorsystem vorgesehen sein; durch dieses kann Intermediatflüssigkeit 22 und/oder Sulfid-Fällungsreagenz 16 in den zweiten Sulfid-Fällungsreaktor 30 eingetragen werden.

Als Sulfid-Fällungsreagenz 16 kommen wieder die oben beschriebenen Sulfid-Fällungsreagenzien in Betracht. Auch im zweiten Sulfid-Fällungsreaktor 30 wird das Sulfid-Fällungsreagenz 16 bei Temperaturen zwischen 40°C und 80°C zugegeben.

Die Temperatur kann sowohl im ersten Sulfid-Fällungsreaktor 14 als auch im zweiten Sulfid-Fällungsreaktor 30 niedriger sein und beispielsweise bei Raumtemperatur liegen.

Bezogen auf den Arsengehalt der Intermediatflüssigkeit 22 wird bei dem zweiten Fällungsschritt C.2 Sulfid-Fällungsreagenz 16 überstöchiometrisch zugegeben, um ein vollständiges Ausfällen des vorhandenen Arsens als Arsensulfid sicherzustellen. Darüber hinaus fallen auch noch vorhandene Schwermetalle, vornehmlich Kupfer, als Sulfide aus. Dabei wird eine Restflüssigkeit 32 erzeugt, welche weitgehend von Arsen befreit ist. Gegebenenfalls sind noch Schwermetalle, insbesondere Cadmium und Quecksilber vorhanden. Das Sulfid-Fällungsreagenz 16 wird überstöchiometrisch und insbesondere im Verhältnis 1,5:1, im Verhältnis 2:1, im Verhältnis 3:1 oder im Verhältnis von mindestens 4:1 bezogen auf den Arsengehalt der Intermediatflüssigkeit 22 zugegeben. Gegebenenfalls können auch beträchtlich überstöchiometrische Verhältnisse vorgegeben werden. So kann das Verhältnis beispielsweise bis zu 20:1 betragen.

In den zweiten Sulfid-Fällungsreaktor 30 wird ergänzend Luft 34 eingeblasen, was einerseits die Durchmischung im zweiten Sulfid-Fällungsreaktor 30 unterstützt und andererseits Schwefelwasserstoff verdrängt, der im zweiten Sulfid-Fällungsreaktor 30 entsteht. Die Luft 34 ist in der Praxis im Hinblick auf Feuchte und Temperatur konditioniert und von störenden Verunreinigungen befreit.

Im zweiten Sulfid-Fällungsreaktor 30 entsteht somit Abluft 36, welche Schwefelwasserstoff enthält. Diese Abluft 36 wird, ebenso wie die Abluft 18 aus dem ersten Sulfid-Fällungsreaktor 14, zu der Wascheinrichtung 24 geführt, wobei der Gehalt an Schwefelwasserstoff mit Hilfe einer weiteren Messeinrichtung 38 ermittelt wird. Auch wenn die Abluft 18 aus dem ersten Sulfid-Fällungsreaktor 14 keinen Schwefelwasserstoff mit sich führt, wird das Prozesswasser 12, das in die Wascheinrichtung 24 eingebracht wird, dort folglich stets mit Schwefelwasserstoff beaufschlagt.

Das Prozesswasser 12 wäscht auf diese Weise den Schwefelwasserstoff aus der Abluft 18 und/oder der Abluft 36 heraus und wird hiernach als mit Schwefelwasserstoff versetztes Prozesswasser 12a in den ersten Sulfid-Fällungsreaktor 14 geführt. Die auf diese Weise in den ersten Sulfid-Fällungsreaktor 14 eingebrachte Menge an Schwefelwasserstoff wird bei der Regelung der zuzugebenden Menge des Sulfid-Fällungsreagenz 16 in den ersten Sulfid-Fällungsreaktor 14 berücksichtigt. Somit fußt die Zugabe von Sulfid-Fällungsreagenz 16 zum ersten Sulfid-Fällungsreaktor 14 beim vorliegenden Ausführungsbeispiel auf den Daten der Analysestufe B.1, der Messeinrichtung 20 und der weiteren Messeinrichtung 38.

Gegebenenfalls kann der Schwefelwasserstoff in der Wascheinrichtung 24 auch durch Natronlauge NaOH geleitet werden, wodurch Natriumhydrogensulfid NaHS erzeugt wird, welches dann als Sulfid-Fällungsreagenz 16 als wässrige Lösung in den ersten Sulfid-Fällungsreaktor 14 geleitet wird. Dies ist in Figur 2 gezeigt, in der NaOH mit 24' bezeichnet ist und die Wascheinrichtung 24 das Sulfid-Fällungsreagenz 16 erzeugt, welches dann wie oben beschrieben in den ersten Sulfid-Fällungsreaktor 14 und/oder den zweiten Sulfid-Fällungsreaktor 30 geleitet wird.

Somit kann das Sulfid-Fällungsreagenz, welches dem Prozesswasser 12 in dem ersten Sulfid-Fällungsreaktor 14 zugegeben wird, einerseits das mit dem Bezugszeichen 16 bezeichnete Sulfid-Fällungsreagenz und anderseits den zur Wascheinrichtung 24 gelangende Schwefelwasserstoff oder daraus erzeugtes Sulfid-Fällungsreagenz umfassen.

Bei einer nicht eigens gezeigten Abwandlung wird auch in den ersten Sulfid-Fällungsreaktor 14 ergänzend Luft 34 eingeblasen, um dort entstehenden Schwefelwasserstoff zu verdrängen, der auf diese Weise mit entsprechender Abluft zur Wascheinrichtung 24 gedrückt wird. Zudem kann die Durchmischung durch die Luft gefördert werden, wenn diese in das Prozesswasser 12 eingeblasen wird.

In der Wascheinrichtung 24 entsteht von Schwefelwasserstoff weitgehend befreite Abluft 40, die zur weiteren Aufreinigung einem Abluftwäscher 42 zugeführt wird, wie es ebenfalls an und für sich bekannt ist. Dort werden insbesondere noch mögliche Restbestandteile an Schwefelwasserstoff entfernt.

Die Restflüssigkeit 32 wird zusammen mit den ausgefällten Sulfiden als Restgemisch 32a aus dem zweiten Sulfid-Fällungsreaktor 30 zu einer oder mehreren weiteren Trennstufen des Abscheideabschnitts III überführt, in dem die ausgefällten Sulfide von der Restflüssigkeit 32 getrennt werden. In der Figur ist für diesen Zwecke, erneut stellvertretend, eine Trennstufe E veranschaulicht, welcher der Trennstufe D für das Gemisch 22a entspricht und entsprechend eine Filtereinheit 26 mit Filtertuch 28 umfasst, so dass die Restflüssigkeit 32 als Filtrat verbleibt und sich ein erneut nicht gesondert gekennzeichneter Filterkuchen ausbildet. Der Filterkuchen wird ebenfalls gesammelt und kann im Anschluss dem bei der Trennstufe D angesprochenen Entsorgungsabschnitt IV zugeführt und insbesondere verbrannt werden.

Die in der Filtereinheit 26 der Trennstufe E abgetrennte Restflüssigkeit 32 hat eine Restkonzentration von Arsen von weniger als 1 mg/L und kann als technische Säure 44, beim vorliegenden Ausführungsbeispiel als technische Schwefelsäure, in chemischen Prozessen verwendet werden. Hierzu wird sie zu einer weiteren Verwertung V gefördert. Gegebenenfalls wird die Säure 44 zunächst weiteren Aufbereitungsschritten unterzogen, wie sie an und für sich bekannt sind.

Auch in die Filtereinheit 26 der Trennstufe E wird ergänzend Luft 34 eingeblasen, wodurch in der Atmosphäre der Trennstufe E noch vorhandenen oder gegebenenfalls noch entstehenden Schwefelwasserstoff zu verdrängen. Dieser wird als Abluft 46 über eine entsprechende Leitung entweder in die Wascheinrichtung 24 gedrückt, wodurch auch dieser Schwefelwasserstoff als ergänzendes Sulfid-Fällungsreagenz genutzt werden kann, oder in den Abluftwäscher 42 geführt.

Allgemein ausgedrückt, wird also Schwefelwasserstoff von wenigstens einer der Verfahrensstufen, vorliegend der Trennstufen D, E, und Verfahrensschritte, vorliegend der Sulfid-Fällungsschritte C.1 bzw. C.2, in denen Schwefelwasserstoff freigesetzt wird, als Sulfid-Fällungsreagenz oder zur Erzeugung von Sulfid-Fällungsreagenz für den ersten Sulfid-Fällungsschritt verwendet.

Bei einer nicht eigens gezeigten Abwandlung werden die Schwefelwasserstoff-Konzentrationen der Abluft 36 aus dem zweiten Sulfid-Fällungsreaktor 30 und der Abluft 46 aus der Trennstufe E getrennt durch gesonderte Messeinrichtungen ermittelt. In diesem Fall kann insbesondere die Dosierung von Sulfid-Fällungsreagenz 16 zum zweiten Sulfid-Fällungsreaktor 30 abhängig von dem Schwefelwasserstoff-Gehalt der dortigen Abluft 36 eingestellt werden, um eine übermäßig überstöchiometrische Dosierung zu vermeiden, wenn dies gewünscht ist.

Bei einer weiteren nicht eigens gezeigten Abwandlung wird auch in die Filtereinheit 26 der Trennstufe D Luft 34 eingeblasen und dort entstehende Abluft über eine Messeinrichtung zur Bestimmung des Schwefelwasserstoff-Gehalts zur Wascheinrichtung 24 geführt. Entsprechend trägt diese Abluft bzw. dieser Schwefelwasserstoff zu Einstellung der Dosierung des Sulfid-Fällungsreagenz 16 in den ersten Sulfid-Fällungsreaktor 14 bei.

Insgesamt kann durch die Rückgewinnung bzw. Nutzung des jeweils entstehenden Schwefelwasserstoffs H₂S die erforderliche Menge an Sulfid-Fällungsreagenz 16 um bis zu 90% und mehr gesenkt werden, bezogen auf die Menge, die ohne die Nutzung des entstehenden Schwefelwasserstoffs notwendig wäre.

## Patentansprüche

1. Verfahren zur Fällung von Arsen und Schwermetall aus saurem, insbesondere schwefelsaurem, Prozesswasser (12), das sowohl arsen- als auch schwermetallhaltig ist, wobei das Verfahren einen Fällungs-Verfahrensabschnitt (II) mit einer Sulfid-Fällungsstufe (C) umfasst, in welcher Arsen und wenigstens ein Primär-Schwermetall gemeinsam ausgefällt werden, indem dem Prozesswasser (12) ein Sulfid-Fällungsreagenz (16) zugegeben wird, so dass Arsen als Arsensulfid und das wenigstens eine Primär-Schwermetall als Metallsulfid ausfallen,
wobei
a) die Sulfid-Fällungsstufe (C) einen ersten Sulfid-Fällungsschritt (C.1) umfasst, bei welchem dem Prozesswasser (12) in einem ersten Sulfid-Fällungsreaktor (14) Sulfid-Fällungsreagenz zugegeben wird, wodurch eine Intermediatflüssigkeit (22) erzeugt wird, welche noch Arsen oder noch Arsen und Primär-Schwermetall enthält;
b) die Intermediatflüssigkeit (22) nach dem ersten Sulfid-Fällungsschritt (C.1) in einen zweiten Sulfid-Fällungsreaktor (30) überführt wird;
c) die Sulfid-Fällungsstufe (C) einen zweiten Sulfid-Fällungsschritt (C.2) umfasst, bei welchem der Intermediatflüssigkeit (22) in dem zweiten Fällungsreaktor Sulfid-Fällungsreagenz zugegeben wird, wodurch eine Restflüssigkeit (32) erzeugt wird, welche weitgehend von Arsen befreit ist;
wobei
d) nach dem ersten Sulfid-Fällungsschritt (C.1) wenigstens eine Trennstufe (D) durchgeführt wird, in welcher ausgefallene Sulfide von der Intermediatflüssigkeit (22) getrennt werden;
und/oder
e) nach dem zweiten Sulfid-Fällungsschritt (C.2) wenigstens eine Trennstufe (E) durchgeführt wird, in welcher ausgefallene Sulfide von der Restflüssigkeit (32) getrennt werden;
**dadurch gekennzeichnet, dass**
f) dem ersten Sulfid-Fällungsreaktor (14) und/oder dem zweiten Sulfid-Fällungsreaktor (30) und/oder einer oder mehreren Trennstufe (D, E) Luft (34), insbesondere konditionierte Luft (34), zugeführt wird;
g) im ersten Sulfid-Fällungsreaktor (14) entstehende Abluft (18) mittels einer Messeinrichtung (20) auf das Vorhandensein von Schwefelwasserstoff überwacht wird.

2. Verfahren nach Anspruch 1, **dadurch gekennzeichnet, dass** vor dem ersten Sulfid-Fällungsschritt (C.1) in einer Analysestufe (B.1) eine Analyse des Prozesswassers (12) zumindest im Hinblick auf den Arsengehalt durchgeführt wird.

3. Verfahren nach Anspruch 1 oder 2, **dadurch gekennzeichnet, dass** beim ersten Sulfid-Fällungsschritt (C.1) Sulfid-Fällungsreagenz zumindest bezogen auf den Arsengehalt des Prozesswassers (12) unterstöchiometrisch zugegeben wird.

4. Verfahren nach Anspruch 3, **dadurch gekennzeichnet, dass** Sulfid-Fällungsreagenz unterstöchiometrisch im Verhältnis 1:1,2 bis 1:1,01, vorzugsweise im Verhältnis 1:1,15 bis 1:1,01, bevorzugt im Verhältnis 1:1,1 bis 1:1,01 und besonders bevorzugt im Verhältnis 1:1:05 bezogen auf den Arsengehalt des Prozesswassers (12) zugegeben wird.

5. Verfahren nach einem der Ansprüche 1 bis 4, **dadurch gekennzeichnet, dass** vor dem zweiten Sulfid-Fällungsschritt (C.2) in einer Analysestufe (B.2) eine Analyse der Intermediatflüssigkeit (12) zumindest im Hinblick auf den Arsengehalt durchgeführt wird.

6. Verfahren nach einem der Ansprüche 1 bis 5, **dadurch gekennzeichnet, dass** beim zweiten Sulfid-Fällungsschritt (C.2) Sulfid-Fällungsreagenz zumindest bezogen auf den Arsengehalt der Intermediatflüssigkeit (22) überstöchiometrisch zugegeben wird.

7. Verfahren nach Anspruch 6, **dadurch gekennzeichnet, dass** Sulfid-Fällungsreagenz (16) überstöchiometrisch im Verhältnis 1,5:1, im Verhältnis 2:1, im Verhältnis 3:1 oder im Verhältnis von mindestens 4:1 oder im Verhältnis 20:1 bezogen auf den Arsengehalt der Intermediatflüssigkeit (22) zugegeben wird.

8. Verfahren nach einem der Ansprüche 1 bis 7, **dadurch gekennzeichnet, dass** Schwefelwasserstoff von wenigstens einer der Verfahrensstufen (D, E) und Verfahrensschritte (C.1, C.2), in denen Schwefelwasserstoff freigesetzt wird, als Sulfid-Fällungsreagenz oder zur Erzeugung von Sulfid-Fällungsreagenz für den ersten Sulfid-Fällungsschritt (C.1) verwendet wird.

## Claims

1. A method of precipitating arsenic and heavy metal out of acidic process water (12), especially containing sulfuric acid, and containing both arsenic and heavy metals, where the method comprises a method step (II) of precipitation with a sulfide precipitation stage (C) in which arsenic and at least one primary heavy metal are coprecipitated, by adding a sulfide precipitation reagent (16) to the process water (12) such that arsenic precipitates out as arsenic sulfide and the at least one primary heavy metal as the metal sulfide,
wherein
a) the sulfide precipitation stage (C) comprises a first sulfide precipitation step (C.1) in which sulfide precipitation reagent is added to the process water (12) in a first sulfide precipitation reactor (14), producing an intermediate liquid (22) still containing arsenic or still containing arsenic and primary heavy metal;
b) the intermediate liquid (22), after the first sulfide precipitation step (C.1), is transferred into a second sulfide precipitation reactor (30);
c) the sulfide precipitation stage (C) comprises a second sulfide precipitation step (C.2) in which sulfide precipitation reagent is added to the intermediate liquid (22) in the second precipitation reactor, producing a residual liquid (32) that has been largely freed of arsenic;
wherein
d) after the first sulfide precipitation step (C.1) at least one separation stage (D) is conducted, in which precipitated sulfides are separated from the intermediate liquid (22);
and/or
e) after the second sulfide precipitation step (C.2) at least one separation stage (E) is conducted, in which precipitated sulfides are separated from the residual liquid (32);
**characterized in that**
f) the first sulfide precipitation reactor (14) and/or the second precipitation reactor (30) and/or one or more separation stages (D, E) are supplied with air (34), especially conditioned air (34);
g) output air (18) that arises in the first sulfide precipitation reactor (14) is monitored for the presence of hydrogen sulfide by means of a measurement device (20).

2. The method as claimed in claim 1, **characterized in that**, before the first sulfide precipitation step (C.1), an analysis of the process water (12) at least with regard to the arsenic content is conducted in an analysis stage (B.1).

3. The method as claimed in claim 1 or 2, **characterized in that**, in the first sulfide precipitation step (C.1), sulfide precipitation reagent is added in a substoichiometric amount at least based on the arsenic content of the process water (12).

4. The method as claimed in claim 3, **characterized in that** sulfide precipitation reagent is added in a substoichiometric ratio of 1:1.2 to 1:1.01, preferably in a ratio of 1:1.15 to 1:1.01, more preferably in a ratio of 1:1.1 to 1:1.01 and especially preferably in a ratio of 1:1:05, based on the arsenic content of the process water (12).

5. The method as claimed in any of claims 1 to 4, **characterized in that**, before the second sulfide precipitation step (C.2), an analysis of the intermediate liquid (12) at least with regard to the arsenic content is conducted in an analysis stage (B.2).

6. The method as claimed in any of claims 1 to 5, **characterized in that**, in the second sulfide precipitation step (C.2), sulfide precipitation reagent is added in a superstoichiometric amount at least based on the arsenic content of the intermediate liquid (22).

7. The method as claimed in claim 6, **characterized in that** sulfide precipitation reagent (16) is added in a superstoichiometric ratio of 1.5:1, in a ratio of 2:1, in a ratio of 3:1 or in a ratio of at least 4:1 or in a ratio of 20:1, based on the arsenic content of the intermediate liquid (22).

8. The method as claimed in any of claims 1 to 7, **characterized in that** hydrogen sulfide from at least one of the process stages (D, E) and process steps (C.1, C.2) in which hydrogen sulfide is released is used as sulfide precipitation reagent or for production of sulfide precipitation reagent for the first sulfide precipitation step (C.1).

## Revendications

1. Procédé de précipitation d'arsenic et de métal lourd d'eau de fabrication acide (12), notamment d'acide sulfurique, qui contient aussi bien de l'arsenic que du métal lourd, dans lequel le procédé comprend une section de procédé de précipitation (II) avec un étage de précipitation de sulfure (C), dans lequel de l'arsenic et au moins un métal lourd primaire sont précipités ensemble en ce qu'un réactif de précipitation de sulfure (16) est ajouté à l'eau de fabrication (12), de sorte que de l'arsenic précipite en tant que sulfure d'arsenic et l'au moins un métal lourd primaire en tant que sulfure métallique,
dans lequel
a) l'étage de précipitation de sulfure (C) comprend une première étape de précipitation de sulfure (C.1) lors de laquelle du réactif de précipitation de sulfure est ajouté à l'eau de fabrication (12) dans un premier réacteur de précipitation de sulfure (14), moyennant quoi un fluide intermédiaire (22) est généré, lequel contient encore de l'arsenic ou encore de l'arsenic et du métal lourd primaire ;
b) le fluide intermédiaire (22) est transféré dans un second réacteur de précipitation de sulfure (30) après la première étape de précipitation de sulfure (C.1) ;
c) l'étage de précipitation de sulfure (C) comprend une seconde étape de précipitation de sulfure (C.2) lors de laquelle du réactif de précipitation de sulfure est ajouté au fluide intermédiaire (22) dans le second réacteur de précipitation, moyennant quoi un fluide résiduel (32) est généré, lequel est largement exempt d'arsenic ;
dans lequel
d) au moins un étage de séparation (D) est réalisé après la première étape de précipitation de sulfure (C.1), dans lequel des sulfures précipités sont séparés du fluide intermédiaire (22) ;
et/ou
e) au moins un étage de séparation (E) est réalisé après la seconde étape de précipitation de sulfure (C.2), dans lequel des sulfures précipités sont séparés du fluide résiduel (32) ;
**caractérisé en ce que**
f) de l'air (34), notamment de l'air conditionné (34), est amené au premier réacteur de précipitation de sulfure (14) et/ou au second réacteur de précipitation de sulfure (30) et/ou à un ou plusieurs étages de séparation (D, E) ;
g) de l'air vicié (18) apparaissant dans le premier réacteur de précipitation de sulfure (14) est surveillé au moyen d'un dispositif de mesure (20) quant à la présence de sulfure d'hydrogène.

2. Procédé selon la revendication 1, **caractérisé en ce qu'**une analyse de l'eau de fabrication (12) au moins en ce qui concerne la teneur en arsenic est réalisée dans un étage d'analyse (B.1) avant la première étape de précipitation de sulfure (C.1).

3. Procédé selon la revendication 1 ou 2, **caractérisé en ce que** du réactif de précipitation de sulfure est ajouté lors de la première étape de précipitation de sulfure (C.1) en proportion sous-stœchiométrique au moins par rapport à la teneur en arsenic de l'eau de fabrication (12).

4. Procédé selon la revendication 3, **caractérisé en ce que** du réactif de précipitation de sulfure est ajouté en proportion sous-stœchiométrique dans le rapport de 1/1,2 à 1/1,01, de préférence dans le rapport de 1/1,15 à 1/1,01, de manière préférée dans le rapport de 1/1,1 à 1/1,01 et de manière particulièrement préférée dans le rapport de 1/1,05, par rapport à la teneur en arsenic de l'eau de fabrication (12).

5. Procédé selon une des revendications 1 à 4, **caractérisé en ce qu'**une analyse du fluide intermédiaire (12) au moins en ce qui concerne la teneur en arsenic est réalisée dans un étage d'analyse (B.2) avant la seconde étape de précipitation de sulfure (C.2).

6. Procédé selon une des revendications 1 à 5, **caractérisé en ce que** du réactif de précipitation de sulfure est ajouté lors de la seconde étape de précipitation de sulfure (C.2) en proportion sur-stœchiométrique au moins par rapport à la teneur en arsenic du fluide intermédiaire (22).

7. Procédé selon la revendication 6, **caractérisé en ce que** du réactif de précipitation de sulfure (16) est ajouté en proportion sur-stoechiométrique dans le rapport de 1,5/1, dans le rapport de 2/1, dans le rapport de 3/1 ou dans le rapport d'au moins 4/1 ou dans le rapport de 20/1 par rapport à la teneur en arsenic du fluide intermédiaire (22).

8. Procédé selon une des revendications 1 à 7, **caractérisé en ce que** du sulfure d'hydrogène d'au moins un des étages de procédé (D, E) et des étapes de procédé (C.1, C.2), dans lesquels du sulfure d'hydrogène est libéré, est utilisé en tant que réactif de précipitation de sulfure ou pour la génération de réactif de précipitation de sulfure pour la première étape de précipitation de sulfure (C.1).
